# EUROPEAN PATENT APPLICATION

(11) **EP 2 618 268 A1**
(43) Date of publication of application: **24.07.2013**
(21) Application number: 11824547.1
(22) Date of filing: 29.08.2011
(51) Int. Cl.: G06F 17/00

(54) **METHOD AND DEVICE FOR DATA STORAGE**

(30) Priority: 14.09.2010 CN 201010283713
(71) Applicant: Tencent Technology (Shenzhen) Company Limited, Shenzhen, Guangdong 518044 (CN)
(72) Inventor: PENG, Yong, Shenzhen Guangdong 51804 (CN)
(74) Representative: Reichert, Sabine
(86) International application number: PCT/CN2011/079035
(87) International publication number: WO 2012/034477

(57) **Abstract**

Method and device for data storage are provided. The data storage method includes: generating a custom data structure which includes at least a first node as a root node, herein, each node of the custom data structure includes a first module for storing type identifiers and values of data, and a second module for storing a mapping list that stores mapping relationship between identifiers of child nodes of the each node and the child nodes; when receiving data every time, determining a storage location and a type of the received data; if the received data is stored in the first node of the custom data structure, storing the type and a value of the received data in a first module of the first node; and if the received data is stored in a second node of the custom data structure, storing the type and the value of the received data in a first module of the second node.

## Description

### FIELD OF THE INVENTION

The present invention relates to a computer technology, and more particularly to a data storage method and a data storage device.

### BACKGROUND OF THE INVENTION

With the development of the computer technology and the network technology, a variety of computer-based communication systems, such as instant messaging (IM) systems, micro-blog communication systems, have emerged. In such communication systems, system data needs to be stored and used in order to provide various functions for the system. Data is generally stored in a certain type, and a compiler will strictly check types of the data to make them safe at a compilation phase (especially some strongly-typed languages, for example C++). Different data types are interchangeable and cannot be assigned with value at this phase. In this case, storing some slightly more complex data requires using STL in combination with some custom data structures. However, for the data under different situations, different data structures need to be defined. Therefore, it is not convenient to use the data which is stored using this method.

For the above-mentioned reasons, some improved storage devices and methods appear, in order to provide flexibility on the use of different data types, such as conversion, reading, or transmission. For example, when storing data for example in script language in script language, a data type is normally represented using a VARIANT structure. However, in a VARIANT structure, only one data type is valid at a time, that is, only one data can be processed at a time. Number and string types cannot be stored at the same time, that is, it cannot support batch processing for the data.

### SUMMARY OF THE INVENTION

To support batch processing for the data, embodiments of the present invention provide a data storage method and a data storage device, and a common data type of component.

According to one embodiment of the present invention, the data storage method includes: generating a custom data structure which includes at least a first node as a root node, each node of the custom data structure includes a first module for storing type identifiers and values of data, and a second module for storing a mapping list that stores mapping relationship between identifiers of child nodes of the each node and the child nodes; when receiving data every time, determining a storage location and a type of the received data; if the received data is stored in the first node of the custom data structure, storing the type and a value of the received data in a first module of the first node; and if the received data is stored in a second node of the custom data structure, storing the type and the value of the received data in a first module of the second node.

According to another embodiment of the present invention, the data storage device includes: a data interface and a common data type of component, the data interface is for receiving data; the common data type of component is for generating and storing a custom data structure which includes at least a first node as a root node, each node of the custom data structure includes a first module for storing type identifier and value of the received data, and a second module for storing a mapping list that stores mapping relationship between identifiers of child nodes of the each node and the child nodes; when the data interface receives data every time, determining a storage location and a type of the received data; if the received data is stored in the first node, store the type and a value of the received data in the first module of the first node; and if the data is stored in a second node of the custom data structure, store the type and the value of the received data in a first module of the second node.

According to another embodiment of the present invention, a common data type of component includes: a node generating module, a determining module, and a storing module; the node generating module is for generating and storing a custom data structure which includes at least a first node as a root node, each node of the custom data structure includes a first module for storing type identifier and value of the received data, and a second module for storing a mapping list that stores mapping relationship between identifiers of child nodes of the each node and the child nodes; the determining module is for determining which one of the first node or a second node the received data is stored in and a type of the received data when receiving data every time, and sending the determined result to the storing module; the storing module is for receiving the determined result, and if the determining module determines that the received data is stored in the first node, store the type and a value of the received data in a first module of the first node; and if the determining module determines that the received data is stored in a second node of the custom data structure, store the type and the value of the received data in a first module of the second node.

The technical solutions provided by the embodiments of the present invention have the following advantages.

A custom data structure in accordance with embodiments of the present invention defines a common data type. When data is stored as a common data type, the common data type can determine a basic type of data to be stored and store the basic type and a value of the data to be stored. Moreover, in a common data type defined by a custom data structure, each node can set a mapping list <identifier, child nodes> of its child nodes, therefore, large amounts of data can be stored in the common data type. In this case, as long as large amounts of data are stored as a common data type, a variable defined by the common data type can be used to store large amounts of data. And because different data types can be stored in each node in the common data type, the common data type can store different types of data, a variable defined by the common data type can be used to represent large amounts of different types of data.

Moreover, each node has its own type identifiers in the common data types of variables, so that, each node can store different types of data, such as, can store LONG type data, integer(int) type data, and BSTR string type data, without the need of storing compatible types of data.

### BRIEF DESCRIPTION OF THE DRAWINGS

FIG. 1 is a flowchart of a data storage method in accordance with an exemplary embodiment of the present invention;

FIG. 2 is a storage model of the stored data in accordance with an exemplary embodiment of the present invention;

FIG. 3 is a schematic diagram showing a tree structure of a common data type of the stored data in accordance with an exemplary embodiment of the present invention;

FIG. 4 is a schematic block diagram of a data storage device in accordance with an exemplary embodiment of the present invention; and

FIG. 5 is a schematic block diagram of a data storage device in accordance with another exemplary embodiment of the present invention.

### DETAILED DESCRIPTION OF PREFERRED EMBODIMENTS

To make the objective, the technical solutions and advantages of the present invention more clear and understandable, embodiments of the present invention will be described in detail accompanying with figures as follows.

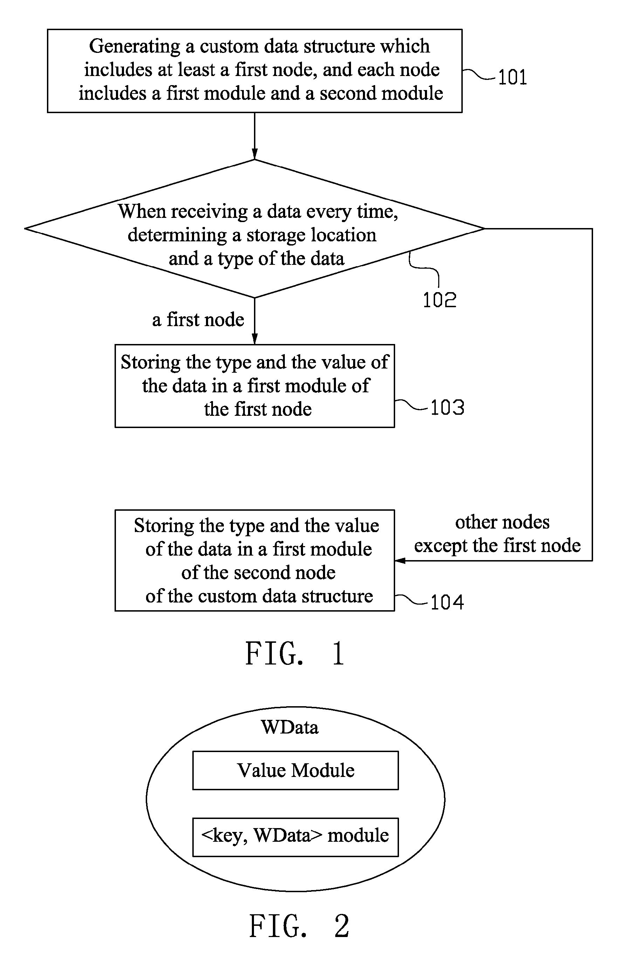

FIG. 1 is a flowchart of a data storage method in accordance with an exemplary embodiment of the present invention. Referring to FIG. 1, the data storage method includes the following steps:

Step 101: generating a custom data structure which includes at least a first node.

In this step, the first node is a root node. Each node includes a first module for storing type identifiers and values of received data, and a second module for storing a mapping list that stores mapping relationship between identifiers of child nodes of the node and the child nodes.

For convenience of description, the data type defined by the custom data structure is called a common data type (signed as WData) in the present invention.

Step 102: when receiving a data every time, determining a storage location and a type of the received data.

In this step, when user assigns a value to a variable with a custom data structure, the custom data structure receives the data. Herein, assigning a value by a user to a variable is equivalent to storing the data in the variable. The type of the data can be any basic types, such as integer (int) type, float type, or byte type.

Step 103: If the received data is stored in the first node, storing the type and the value of the received data in a first module of the first node.

In this step, when the received data is stored in the first node, that is, the received data is stored in the root node, the root node need not correspond to a mapping list that stores mapping relationship between a node identifier and the node, that is, <key, node WData> (hereinafter referred to as <key, WData>). And, when only the first node is in the custom data structure, the mapping list of a second module of the first node is empty. When the first node has child nodes, the mapping list of the second module of the first node records a mapping list <key, WData> that stores mapping relationship between identifiers of child nodes of the first node and the child nodes.

Step 104: If the received data is stored in other node (is called a second node) of the custom data structure, storing the type and the value of the received data in a first module of the second node.

In this step, when the received data is stored in the second node, because the second node is a child node, the received data is child data. At this time, the second node corresponds to a mapping list, for example <key2, WData>, that stores mapping relationship between a node identifier and the node. The mapping list is stored in a parent node of the second node for indexing the child nodes of the parent node, thereby indexing the received data of the child nodes.

Before step 104, the method also includes: determining whether the custom data structure includes the second node. If the custom data structure does not include the second node, generating the second node of the custom data structure. If the custom data structure includes the second node, directly storing the type and the value of the received data in the first module of the second node.

Method of generating the second node of the custom data structure may include: filling a mapping list that stores mapping relationship between an identifier of the second node and the second node in a second module of a parent node of the second node.

Similarly, when receiving data stored in child nodes of the second node, filling a mapping list that stores mapping relationship between identifiers of child nodes and the child nodes in a second module of the second node.

The above-mentioned custom data structure can be realized by C++ language, script language, VB language, or other languages.

It can be seen from the above-mentioned embodiments, because the custom data structure defines a common data type, when the data is stored as the common data type, the common data type can determine a type of the data to be stored and store the type and the value of the data to be stored. Thus, users can store data without manually converting different data types.

Moreover, in a common data type of a custom data structure, each node can set a mapping list <key, WData> of its child nodes, therefore, large amounts of data can be stored as the common data type. In this case, as long as large amounts of data is stored as common data types, the large amounts of data can be transmitted when transmitting a variable of common data type, which can greatly simplify the construction and maintenance of the communications system.

FIG. 2 is a storage model of the stored data in accordance with an exemplary embodiment of the present invention, that is, FIG. 2 shows a storage model of each node in the custom data structure. Referring to FIG. 2, each storage model stores at least one WData data which includes a first module (Value Module), for storing type identifiers and values of the WData data, and a second module (<key, WData> module), for storing a mapping list <key, WData> that stores mapping relationship between identifiers of child nodes of the node and the child nodes. In the second module, "key" can be represented using string.

Using the above-mentioned storage model, the common data type WData can be created into a tree structure common data type.

According to embodiments of the present invention, the above-mentioned first module can use a VARIANT structure to store type identifiers and values of the data. Particularly, within the VARIANT structure, a type identifier may represent a specific data type. When there is a need to use the stored data, types of the data can be determined according to the type identifier in the VARIANT structure, then the stored data is obtained.

The VARIANT structure is defined as follows:

struct tagVARIANT

{

union

{

struct __tagVARIANT

{

VARTYPE vt; // type identifier

WORD wReserved1;

WORD wReserved2;

WORD wReserved3;

// the following is a specific type, and only one is valid at a //time

// determining which one is valid according to type identifier

union

{

LONG1Val;

BYTE bVal;

SHORT ival;

FLOAT fltVal;

......

}

......

}

......

After the VARIANT structure is defined, the data can be stored according to the above-mentioned structure. After the data is stored, the stored data can be used.

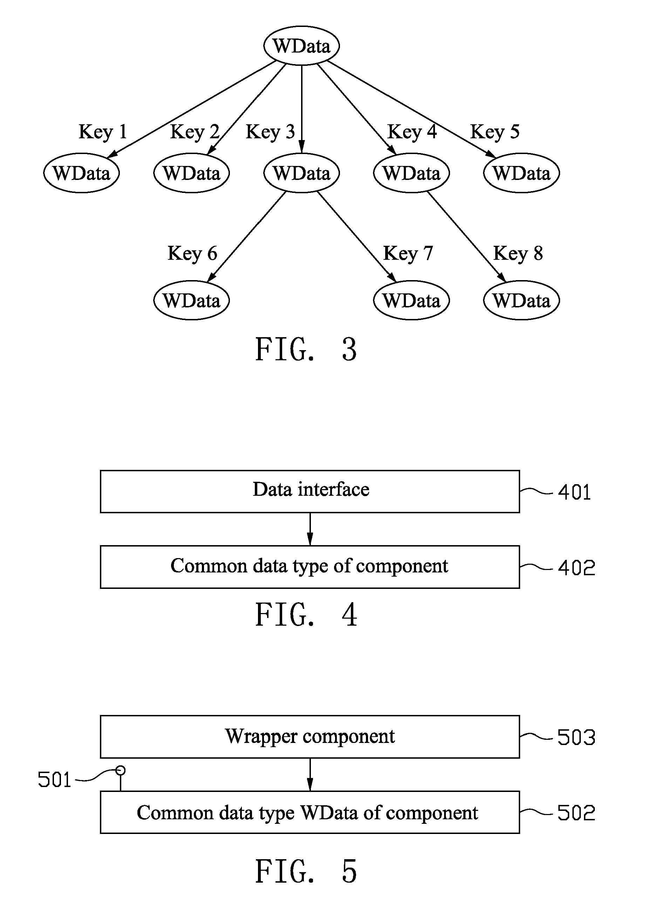

FIG. 3 is a schematic diagram showing a tree structure of a common data type of the stored data in accordance with an exemplary embodiment of the present invention. Referring to FIG. 3, the first node (the root node) can have one or more child nodes, and each child node can have one or more child nodes, and so on. In this case, a common data type of a variable can store large amounts of data. And, because the use of this mapping relationship <key, WData>, each stored data can be easily read and obtained, and types or values of one or more stored data can be easily changed. In FIG. 3, the first module of the first node stores a value itself and a type identifier of the value. The stored list <key, WData> in the second module includes five mapping relationships: (key1, WData), (key2, WData), (key3, WData), (key4, WData), and (key5, WData). Among them, the second module of the node corresponding to (key3, WData) includes two mapping relationship <key, WData> lists, that is, (key6, WData) and (key7, WData). The second module of the node corresponding to (key4, WData) includes a mapping <key, WData> list, that is, (key8, WData).

Thus, the storage model provided by the present invention is a recursive storage method, and can form a common data type with a tree structure, to store large amounts of data.

The tree structure as shown in FIG. 3 is only a structure of a common data type of the present invention, and it is not used to limit the structure of the common data type of the present invention. The common data type of the present invention can also be realized by other structures, such as nested structure with multi-level indexing features.

After the common data type defines a variable as shown in FIG. 2 and FIG. 3, the data can be easily processed, such as reading, conversion, and transmission, using the variable.

The data storage method as shown in FIG. 1 can realize storage of different types of data in the same variable, and multi-level storage of large amounts of data, such as, the tree structure storage as shown in FIG. 3. In the following embodiments, the data storage method of the present invention is described with an example of a system in combination with the tree structure as shown in FIG. 3. For example, C++ can be used as a programming language for the system.

In a system, defining a common data type and storing data in the common data type are as follows:

WData data; data = 5; data="xxx";

data["key1"] = 10; data["key1"] ="sss";

data["key3"]["key6"] = 15;

data["key3"]["key6"][...][...]... = ...

It can be seen from the above-mentioned description, a common data type of a variable "data" is defined first. Then, assigning a value to the variable "data", that is, data can be stored in the "data". In this embodiment, "data" is assigned with integer data "5"; and then, "data" can also be assigned with string data "xxx", that is, string data "xxx" can be stored in the variable "data" of the common data type WData to overwrite the previously stored integer data "5". Specifically, the data "5" or "xxx" can be stored in the first module of the root node of the variable "data" (i.e., the Value module) by reloading "=" operator.

In addition to being stored in the root node, data can also be stored using a multi-level storage method, that is, can be stored in child nodes of the root node. For example, integer data "10" or string data "sss" can be stored in a child node corresponding to key1, and integer data "15" can be stored in a child node corresponding to key6 of a child node of key3. Through the above-mentioned storage method, large amounts of different types of data can be stored in a common data type of a variable, thereby facilitating the use of the data. In the multi-level storage, "[]" operator can be reloaded to realize mapping relationship between the key and each WData.

After the data is stored using the method as shown in FIG. 1, the stored data can be easily used for performing operations such as reading, conversion, and transmission. The following will describe how to use the stored data in light of a data storage device.

FIG. 4 is a schematic block diagram of a data storage device in accordance with an exemplary embodiment of the present invention. As shown in FIG. 4, the device includes:

A data interface 401 is for receiving data.

A common data type of component 402 is for generating and storing a custom data structure which includes at least a first node as a root node. Each node includes a first module for storing type identifiers and values of the received data, and a second module for storing a mapping list that stores mapping relationship between identifiers of child nodes of the each node and the child nodes. When the data interface 401 receives a data every time, the common data type of component 402 determines a storage location and a type of the received data. If the received data is stored in the first node, the type and a value of the received data are stored in a first module of the first node. If the received data is stored in a second node of the custom data structure, the type and the value of the received data are stored in a first module of the second node.

According to the embodiments of the present invention, the common data type of component 402 includes a node generating module, a determining module, and a storing module.

The node generating module is for generating and storing a custom data structure which includes at least a first node as a root node.

The determining module is for determining which one of the first node or the second node the received data is stored in and the type of the received data, and sending the determined result to the storing module.

The storing module is for storing the type and the value of the data in the first module of the first node or storing the type and the value of the received data in the first module of the second node according to the determined result of the determining module.

According to the embodiments of the present invention, the determining module is also for determining whether the custom data structure includes a second node when the received data is stored in the second node of the custom data structure. If the custom data structure does not include the second node, the determining module informs the node generating module to generate the second node of the custom data structure. If the custom data structure includes the second node, the determining module informs the storing module to store the type and the value of the received data in the first module of the second node.

According to the embodiments of the present invention, the node generating module generates the second node by filling the mapping list that stores mapping relationship between an identifier of the second node and the second node in a second module of a parent node of the second node.

According to the embodiments of the present invention, the data interface 401 is also for reading data from the first module of the first node via the common data type of component 402, and reading stored data corresponding to node identifier from the common data type of component 402 according to the node identifier.

According to the embodiments of the present invention, the determining module is also for determining whether a data type of a node is different from a type of a newly received data which will be stored in the node. If the data type of the node is different from the type of the newly received data, the determining module modifies a type identifier and a value of the data which is stored in a first module of the node.

The determining module is also for determining whether a type conversion operation for data of a node in the custom data structure is received. If the type conversion operation for data of the node in the custom data structure is received, the determining module modifies a type identifier of the data of a first module of the node.

According to the embodiments of the present invention, the common data type of component 402 also includes a transmission module, for directly transmitting the custom data structure between modules in different or the same systems, for example in different or the same programming language environments.

According to the embodiments of the present invention, the common data type of component can be realized by C++ language, script language, or VB language.

According to the embodiments of the present invention, the device can also include a wrapper component, for wrapping the custom data structure in the common data type of component 402. For example, the wrapper component can be realized in C++ language.

FIG. 5 is a schematic block diagram of a data storage device in accordance with another exemplary embodiment of the present invention. As shown in FIG. 5, taking the realization of the custom data structure of the present invention by C++ language as an example, the device includes: a data interface IWData 501, for receiving or sending data; a common data type WData of component 502, for storing the received data according to the method as shown in FIG. 1; a wrapper component 503, for wrapping the common data type WData of the custom data structure, thereby data can be stored and/or can be multi-level stored using "=" operator and/or "[]" operator. The common data type WData of component 502 can be a Com component in C++ language. In the embodiments of the present invention, values of the data of a root node in WData can also be read via the data interface IWData 501, and the data of child nodes in WData can also be read according to "key".

In the embodiments as shown in FIG. 5, the wrapper component 503 wraps the common data type WData of component 502 into a CWData component. In detail, the wrapper component 503 wraps the data interface IWData 501 using a smart pointer CComPtr <IWData>, thereby making no difference between using the CWData component and directly using the common data type WData of component 502 via the data interface IWData 501. At the same time, CWData makes "=" operator have the function of determining the data and data types in WData by reloading "=" operator, that is, by redefining the meaning of "=" operator. And CWData makes the type conversion operators have the function of determining the data in WData and converting types of the data in WData by reloading the type conversion operators (such as int, BYTE, etc.), that is, by redefining the type conversion operators, thereby, different types of data can be stored in a variable of a common data type, for example in C++ language, and any type of data can be used. By reloading "[]" operator, the WData data of child nodes can be obtained. For example, data ["key1"] represents obtaining WData data of the "data" of the child node of "key1". Because the returned WData data of the child node is still CWData, direct multi-level use of the "[]" operator is similar to the use of multidimensional arrays.

In another embodiment of the present invention, the device as shown in FIG. 5 is used as an example to describe how to use the stored data, such as, reading, conversion, and transmission.

1) The definition of the data interface IWData 501 and data reading can be as follows:

The definition of the data interface:

interface IWData : IDispatch

{

// reading a value of the WData itself

HRESULT GetValue(VARIANT* pVar);

HRESULT SetValue(VARIANT var);

//reading child of the WData according to "key", and the child can have its value and child

HRESULT GetSubData(BSTR bsKey, IWData** ppData);

HRESULT SetSubData(BSTR bsKey,IWData* pData);

......

}

In the above-mentioned embodiments, Value module of each node can be realized using the VARIANT structure.

2) After the Wdata is wrapped by wrapper component 503, CWData can be obtained, data can be stored using CWData, and types of the stored data can be converted:

CWData data;

data = 10 ;

data = "string" ;

data[1] =10 ;

data["key"] = 20;

data["keyl"]["key2"]["key3"] = "test" ;

int x = (int)data;

data = (BYTE)3;

It can be seen from the above embodiments, when data type is converted, the user can specify a particular data type. Because the common data type CWData has a data type determination function, basic types of the data in "data" can be directly converted to the user-specified type. Alternatively, it is not necessary for a user to specify a particular type, instead, the common data type CWData converts the basic type of the data in "data" according to a default type of the stored data. For example, when the data in "data" is number, converting the data type in "data" to a default type of number. When the data in "data" is string, converting the data type in "data" to a default type of string.

For example, in the operation of "data = 10", "10" is stored in the Value module of the root node of "data" by reloading "=" operator, then in the operation of "data =string", "string" is stored in the Value module of the root node of "data" by reloading" = " operator, and this operation realizes conversion of the type of the data of the root node of "data" from integer to string, and the type identifier can be converted from integer to string.

Of course, the wrapper component 503 does not have to be used to wrap Wdata, instead, data can be stored and used by directly using the WData. However, in this case, the operation may be more complex, for example:

// Wdata is directly used to store and use the data

CComPtr<IWData> pData;

CreateWData(&pData);

pData->SetValue(CComVariant(10));

pData->SetValue(CComVariant("string"));

CComPtr<IWData> pSubData;

pData->GetSubValue("key",&pSubData);

pSubData->SetValue(CcomVariant(20));

The results of storing and using data by directly using the WData is equivalent to the following operation results of using the CWData:

CWData data;

data = 10 ;

data = "string" ;

data[1] = 10 ;

data["key"] = 20;

Thus, after the WData component is wrapped by using wrapper component 503, the storage and use of the WData data becomes more simple and more convenient, thereby, the communication system can run faster, and maintenance of communication system will be more convenient, and the cost of maintenance of the communication system can be saved.

3) The common data type Wdata is wrapped by the wrapper component 503, data which is stored as the common type WData is transmitted between each module of the communication system. For example, the embodiments of the present invention can be used in a micro-blog system to store user information of micro-blog and transmit the stored micro-blog user information between each module of the micro-blog system.

For example, a micro-blog system with a module A is as follows:

CWData msg;

msg["id"] = ... ;

msg["content"] = "xxxxx" ;

msg["time"] = ...;

......

The module A may use msg as a parameter to call a module B, for example:

ShowMsg(CWData msg);

the module B is as follows:

Void ShowMsg (CWData msg)

{

// display content

... msg["content"] ...

// display time

... msg["time"]...

.......

}

From the call example between the above-mentioned module A and module B, it can be seen that the module A can transmit three data of "id", "content" and "time" to module B through the use of a "msg" variable, thereby, can realize transmission of large amounts of data between the module A and the module B. Therefore, establishment and maintenance of the micro-blog system are simplified, development and maintenance costs of the micro-blog are saved.

The above descriptions are only preferred embodiments of the present invention, and are not intended to limit the present invention. Any amendments, replacement and modification made to the above embodiments under the principle of the present invention should be included in the scope of the present invention.

## Claims

1. A data storage method, **characterized in that**, the method comprises:
generating a custom data structure which comprises at least a first node as a root node, wherein each node of the custom data structure comprises a first module for storing type identifiers and values of data, and a second module for storing a mapping list that stores mapping relationship between identifiers of child nodes of the each node and the child nodes;
when receiving data every time, determining a storage location and a type of the received data;
if the received data is stored in the first node of the custom data structure, storing the type and a value of the received data in a first module of the first node; and
if the received data is stored in a second node of the custom data structure, storing the type and the value of the received data in a first module of the second node.

2. The method as claimed in claim 1, **characterized in that**, before the received data is stored in the second node of the custom data structure, further comprises:
determining whether the custom data structure comprises the second node;
if the custom data structure does not comprise the second node, generating the second node of the custom data structure; and
if the custom data structure comprises the second node, directly storing the type and the value of the received data in the first module of the second node.

3. The method as claimed in claim 2, **characterized in that**, generating the second node of the custom data structure further comprises:
filling a mapping list that stores mapping relationship between an identifier of the second node and the second node, the mapping list is stored in a second module of a parent node of the second node.

4. The method as claimed in claim 1, 2 or 3, **characterized in that**, if the first node has no child node, a mapping list of a second module of the first node is empty.

5. The method as claimed in claim 4, **characterized in that**, further comprises:
converting type of the received data stored in the custom data structure by reloading type conversion operators;
wherein determining the type of the received data comprises: determining the type of the data by reloading "=" operator.

6. The method as claimed in claim 4, **characterized in that**, further comprises:
transmitting one, more or all data stored in the custom data structure between modules in different or same systems by transmitting the custom data structure.

7. A data storage device, **characterized in that**, the device comprises:
a data interface, adapted to receive data;
a common data type of component, adapted to generate and store a custom data structure which comprises at least a first node as a root node, wherein each node of the custom data structure comprises a first module adapted to store type identifier and value of the received data, and a second module adapted to store a mapping list that stores mapping relationship between identifiers of child nodes of the each node and the child nodes; when the data interface receives data every time, determine a storage location and a type of the received data; if the received data is stored in the first node, store the type and a value of the received data in the first module of the first node; and if the data is stored in a second node of the custom data structure, store the type and the value of the received data in a first module of the second node.

8. The device as claimed in claim 7, **characterized in that**, the common data type of component comprises a node generating module, a determining module, and a storing module, the node generating module is adapted to generate and store the custom data structure which comprises at least the first node as the root node, the determining module is adapted to determine which one of the first node or the second node the received data is stored in and the type of the received data, and send the determined result to the storing module, and the storing module is adapted to store the type and the value of the received data in the first module of the first node or store the type and the value of the received data in the first module of the second node according to the determined result of the determining module.

9. The device as claimed in claim 8, **characterized in that**, the determining module is also adapted to determine whether the custom data structure comprises the second node when the received data is stored in the second node of the custom data structure, if the custom data structure does not comprise the second node, inform the node generating module to generate the second node of the custom data structure, if the custom data structure comprises the second node, inform the storing module to store the type and the value of the data in the first module of the second node.

10. The device as claimed in claim 9, **characterized in that**, the node generating module generates the second node by filling a mapping list that stores mapping relationship between an identifier of the second node and the second node in a second module of a parent node of the second node.

11. The device as claimed in claim 8, 9 or 10, **characterized in that**, the device further comprises a wrapper component, for wrapping the custom data structure in the common data type of component.

12. The device as claimed in claim 10, **characterized in that**, the data interface is further adapted to read data from the first module of the first node via the common data type of component, and read data stored in node corresponding to node identifier from the common data type of component according to the node identifier.

13. The device as claimed in claim 10, **characterized in that**, the determining module is also adapted to determine whether a data type of a node is different from a type of a newly received data which will be stored in the node, if the data type of the node is different from the type of the newly received data modify a type identity and a value of data which is stored in a first module of the node; and/or the determining module is further adapted to determine whether a type conversion operation for data of a node in the custom data structure is received, if the type conversion operation for data of the node in the custom data structure is received, modify a type identifier of the data of the first module of the node.

14. The device as claimed in claim 10, **characterized in that**, the common data type component further comprises a transmission module adapted to transmit one, more or all data stored in the custom data structure between modules in different or the same systems by transmitting the custom data structure.

15. A common data type of component, **characterized in that**, the component comprises:
a node generating module, a determining module, and a storing module; wherein the node generating module is adapted to generate and store a custom data structure which comprises at least a first node as a root node, wherein each node of the custom data structure comprises a first module adapted to store type identifier and value of the received data, and a second module adapted to store a mapping list that stores mapping relationship between identifiers of child nodes of the each node and the child nodes; the determining module is adapted to, when receiving data every time, determine which one of the first node or a second node the received data is stored in and a type of the received data, and send the determined result to the storing module; the storing module is adapted to receive the determined result, and if the determining module determines that the received data is stored in the first node, store the type and a value of the received data in a first module of the first node; and if the determining module determines that the received data is stored in a second node of the custom data structure, store the type and the value of the received data in a first module of the second node.
